# FASCICULE DE BREVET EUROPEEN

(11) **EP 1 665 969 B1**
(45) Date de publication et mention de la délivrance du brevet: **10.09.2008**
(21) Numéro de dépôt: 05356207.0
(22) Date de dépôt: 28.11.2005
(51) Int. Cl.: A47J 31/44

(54) **Appareil électrique à préparer des boissons avec un socle à plancher incliné**
Elektrisches Gerät zur Herstellung von Getränken mit einem Sockel mit schrägem Boden
Electric apparatus for the production of drinks having a base with inclined floor

(30) Priorité: 06.12.2004 FR 0412941
(43) Date de publication de la demande: 07.06.2006
(73) Titulaire: SEB SA, 69130 Ecully (FR)
(72) Inventeur: Morin, Gilles, 14210 Sainte Honorine du Fay (FR)
(74) Mandataire: Kiehl, Hubert

(56) Documents cités:
- US-A- 5 094 153
- US-B1- 6 279 459

## Description

La présente invention est relative à un appareil électrique à préparer des boissons, plus particulièrement à un appareil comportant des moyens de fourniture de liquide permettant soit de faire passer un liquide, généralement de l'eau, au travers d'un filtre contenant une substance destinée à l'infusion ou à la percolation, soit de distribuer un liquide déjà préparé.
Cet appareil peut être un appareil à préparer du café, du thé ou des boissons froides à partir de produits à infuser ou de poudre soluble, ou un distributeur de boissons déjà préparées tels que des distributeurs de sodas par exemple.

De tels appareils à préparer des boissons existent sur le marché, notamment des dispositifs de type espresso, et comportent des fonds qui sont perforés afin de respecter une norme actuellement en vigueur pour certains appareils disposant d'un circuit électrique et d'un circuit hydraulique. Cette norme impose, en effet, la présence, sur le fond de l'appareil, d'une ou de plusieurs perforations dont la surface totale doit être au moins égale à 20 mm²; ces perforations du fond permettant, en cas de fuite interne, une évacuation, à l'extérieur de l'appareil, des liquides issus de ces fuites. Dans les appareils connus, les perforations du fond sont situées en regard du plan de travail sur lequel est posé l'appareil.

Cependant, une telle solution présente l'inconvénient de ne pas prévenir immédiatement ni systématiquement l'utilisateur de la présence de fuites.
En effet, les fuites internes, notamment d'eau, représentent souvent des quantités insuffisantes pour parvenir, après leur passage au travers des perforations, au niveau d'une zone visible par l'utilisateur et, de ce fait, elles ne sont pas systématiquement remarquées par l'utilisateur; il arrive fréquemment qu'elles sèchent sous l'appareil et tâchent de façon irrémédiable le plan de travail sur lequel est posé l'appareil.

Par le document US 5 094 153, on connaît une machine à café disposant d'un système récupérant et évacuant les fuites internes : le socle de cette machine supporte un bac de récupération incliné, filtrant et évacuant, vers une canalisation, l'ensemble des déchets issus de la préparation de la boisson (marc de café, eau de rinçage, liquides issus de fuites internes...).

Dans ce dispositif, l'évacuation du liquide ne se fait pas directement vers l'extérieur de l'appareil et, de ce fait, le liquide évacué, résultant d'une fuite interne, n'est pas visible par l'utilisateur. Le bac récupère et évacue l'ensemble des déchets et n'a aucune fonction d'avertissement en cas de fuite interne.

D'autre part, un dispositif de détection des fuites internes dans un appareil à café est décrit dans le document US 6269735. L'appareil à café dispose d'une enceinte étanche dont une partie est amovible et dans laquelle sont placées des sondes à liquides destinées à détecter des fuites internes. Le dispositif de détection est composé d'un module de contrôle électronique, de sondes, d'indicateurs lumineux avertissant l'utilisateur qui s'occupera alors de vider l'enceinte des liquides indésirables; si du liquide est détecté dans l'enceinte, alors l'indicateur lumineux s'allume et le module de contrôle ferme l'arrivée d'eau afin d'éviter tout débordement et d'empêcher l'utilisation de l'appareil.

Ce dispositif propose d'avertir quasi instantanément l'utilisateur ; toutefois, il nécessite la mise en place d'éléments très coûteux tels que des sondes, un circuit de contrôle électronique et des indicateurs lumineux, générant des coûts de matières premières et d'industrialisation importants. La défaillance d'un seul de ces composants électroniques peut rendre le système inopérant.

Le but de la présente invention est de remédier à ces inconvénients et de proposer un appareil permettant d'avertir l'utilisateur au plus tôt d'une fuite interne tout en respectant les contraintes normatives.

Un autre but de l'invention est de réaliser de manière simple et économique un appareil à préparer des boissons infusées qui soit sûr et fiable.

Ces buts sont atteints avec un appareil électrique à préparer des boissons comportant un boîtier présentant un socle et renfermant un moyen de fourniture de liquide susceptible de provoquer une fuite interne, du fait que ledit socle comporte un plancher dont la face interne est inclinée vers au moins un orifice d'évacuation situé sur un bord dudit socle et débouchant vers l'extérieur.

Par socle, on entend une pièce support ayant une face extérieure en regard du plan de travail et en contact avec celui-ci directement ou par l'intermédiaire d'éléments tels que des pieds ou des patins.

Ainsi l'orifice est situé sur le bord du socle et peut être pratiqué soit dans la partie inférieure du boîtier avoisinant ledit bord du socle, soit au niveau d'une paroi latérale dudit bord du socle.

Un tel appareil dispose de la majeure partie ou la totalité de son circuit hydraulique, notamment son moyen de fourniture du liquide, au dessus de son socle, dans l'enceinte formée par le boîtier; ainsi, en cas de fuite liquide interne, le liquide issu des fuites tombe sur le plancher du socle de l'appareil.

Du fait de l'inclinaison du plancher du socle de l'appareil vers un orifice d'évacuation, l'écoulement et la concentration du liquide au niveau de cet orifice d'évacuation sont optimisés ; ainsi, le liquide issu des fuites s'écoule et s'évacue de manière quasi instantanée à l'extérieur de l'appareil.

Ainsi, le socle de l'appareil fait directement office de bac ou de surface de récupération temporaire, d'écoulement et d'évacuation du liquide vers l'extérieur.

Aucun élément supplémentaire indépendant n'est adjoint au socle afin que ces fonctions soient remplies.

La réalisation de cette solution est simple car aucun élément n'est ajouté ; seule la forme du socle est modifiée. Ceci ne génère pas de coût supplémentaire de fabrication car le socle est soit plan ou incliné, il n'y a donc pas ou il y a très peu d'ajout de matière.

Grâce à l'évacuation directe du liquide vers l'extérieur, un tel socle à plancher et orifice d'évacuation présente l'avantage de rendre les fuites internes visibles dès leur apparition et ainsi de prévenir systématiquement et de manière quasi immédiate l'utilisateur tout en respectant les contraintes normatives de perforations des fonds de ce type d'appareil.

Cette fonction d'avertissement permet de diminuer amplement le risque d'endommagement du plan de travail ainsi que de l'appareil et de limiter le contact entre le liquide issu des fuites et le circuit électrique pouvant s'avérer dangereux.
De plus, l'utilisateur averti dès les premiers signes de dysfonctionnement ne persistera pas à utiliser l'appareil tant qu'une intervention n'aura pas été réalisée.
En effet, la négligence de certains types de fuites pourrait aggraver l'état de l'appareil ou générer un endommagement supplémentaire.

Avantageusement, l'orifice d'évacuation se situe au niveau du point le plus bas de la face interne inclinée du plancher du socle.

Ceci permet d'optimiser l'évacuation des liquides quelle que soit la quantité de liquide ayant fui, il est souhaitable qu'elle soit autant que possible rendue visible pour l'utilisateur. En effet, les quantités issues des fuites peuvent être faibles.

Avantageusement, le socle comprend un bord avant au centre duquel est situé l'orifice d'évacuation.

On aurait pu certes envisager une évacuation sur une face déportée, avec, par exemple, un moyen de rappel à l'utilisateur tel qu'un message au niveau de l'écran LCD ou une étiquette placée à l'avant de l'appareil.

On préfère, toutefois, pour plus de simplicité, que le liquide soit visible directement par l'utilisateur.

L'orifice d'évacuation, ainsi placé sur le bord avant de l'appareil, permettra de réaliser une évacuation des liquides issus des fuites vers la face la plus visible par l'utilisateur lors de l'utilisation de l'appareil.

La mise en place d'un seul orifice permet d'augmenter la quantité du liquide sortant en un même endroit.

La position centrale permet d'optimiser la mise en évidence du liquide évacué.

De préférence, la face interne du plancher est inclinée par rapport à l'horizontale d'un angle α compris entre 0.5° et 10°, de préférence de 1°.

En effet, des essais réalisés ont permis de conclure que, compte tenu des caractéristiques des matériaux utilisés dans ce type de socle et des quantités et qualités des liquides fuyants, une inclinaison de 0.5° est suffisante pour que l'eau puisse s'écouler comme prévu vers l'orifice d'évacuation en cas de fuites.
Au delà de 10° d'inclinaison, il est apparu que l'encombrement devient trop important.

Après de nombreux essais, la valeur de 1° est considérée comme la plus adaptée.

Selon une autre caractéristique de l'appareil, la face interne du plancher comporte des reliefs destinés à supporter des sous-ensembles techniques et présentant des parois inclinées.

En effet, indépendamment de la fonction d'évacuation voulue du liquide, le socle de ce type d'appareil a également pour fonction de supporter des sous-ensembles techniques, directement ou indirectement, au moyen des reliefs.

Toutefois, une fois les éléments de l'appareil assemblés, ces reliefs présentent des parois inclinées de manière à ne pas restreindre l'écoulement ni l'évacuation des liquides au niveau de l'orifice d'évacuation.

En vue d'une optimisation de l'écoulement et de l'évacuation, la face interne du plancher est, de préférence, conçue sans parcelle de surface horizontale ni creuse.

Ainsi, en cas de fuite interne, tout le liquide est évacué, il ne peut pas stagner au sein du socle. De plus, son écoulement est d'autant plus rapide que la pente est élevée.

Nécessairement, le plancher comporte des perforations rendues étanches.

Cette étanchéité est réalisée une fois tous les constituants de l'appareil mis en place.

Ces perforations peuvent être nécessaires à la mise en place, à l'assemblage, à la fixation ou au contrôle des constituants de l'appareil.
Ainsi, en cas de fuite interne, tout le liquide est évacué uniquement vers l'orifice d'évacuation de manière à limiter le risque de tâche sur le plan de travail.

De préférence, le socle est réalisé en un matériau plastique.

Un tel socle est plus facile à réaliser en plastique qu'en un matériau métallique.
De plus, le plastique offre l'avantage de la légèreté et de la résistance au choc.
On peut envisager que le matériau plastique soit une matière plastique type ABS (copolymère acrylonitrile- butadiène- styrène) ou un polypropylène.

Avantageusement, la face interne du plancher du socle est recouverte d'une pellicule de PTFE lisse.

Ainsi, grâce au revêtement en PTFE (Polytetrafluoroethylene), l'écoulement sera facilité par une adhérence amoindrie.

Les buts, aspects et avantages de la présente invention seront mieux compris d'après la description donnée ci-après d'un mode particulier de réalisation de l'invention présenté à titre d'exemple non limitatif, en se référant aux dessins annexés dans lesquels :
- la figure 1 est une vue en perspective du socle d'un appareil à café automatique du type espresso selon un mode de réalisation de l'invention;
- la figure 2 est une vue de dessus du socle de la figure 1 ;
- la figure 3 est une vue en coupe selon la ligne B-B de la figure 2 ;
- la figure 4 est une vue en coupe selon la ligne C-C de la figure 2;
- la figure 5 est une vue identique à la figure 1, le socle étant muni d'une partie des sous-ensembles techniques.

Seuls les éléments nécessaires à la compréhension de l'invention ont été représentés. Pour faciliter la lecture des dessins, les mêmes éléments portent les mêmes références d'une figure à l'autre.

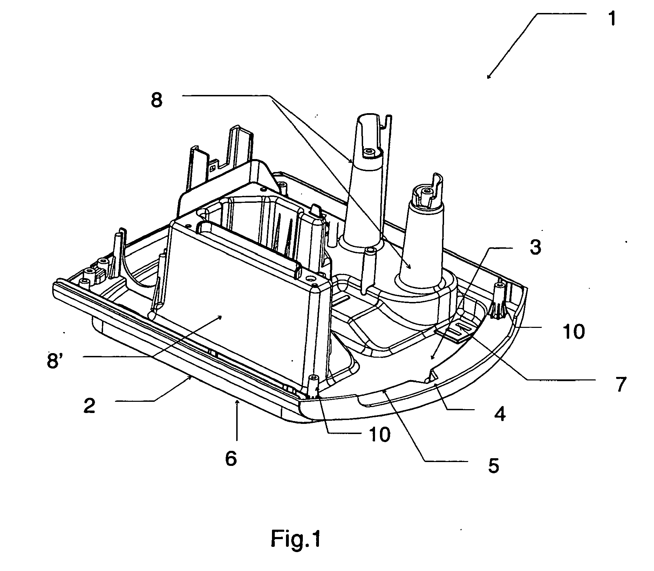

Selon un mode de configuration de l'invention, un socle 1 d'une machine à café automatique du type espresso est représenté sur les figures 1, 2, 3, et 4.

Le socle 1 de l'appareil est l'élément le plus proche du plan de travail sur lequel est placé l'appareil au moyen de patins.

Selon ce mode de configuration, la forme générale du socle 1 correspond à une cuvette avec un plancher 2, des parois latérales disposant de rebords externes au niveau de leurs bords supérieurs.

Le plancher 2 présente une face externe 6 à l'appareil, située en regard du plan de travail ; cette face est horizontale et parallèle au plan de travail sur lequel est placé l'appareil.

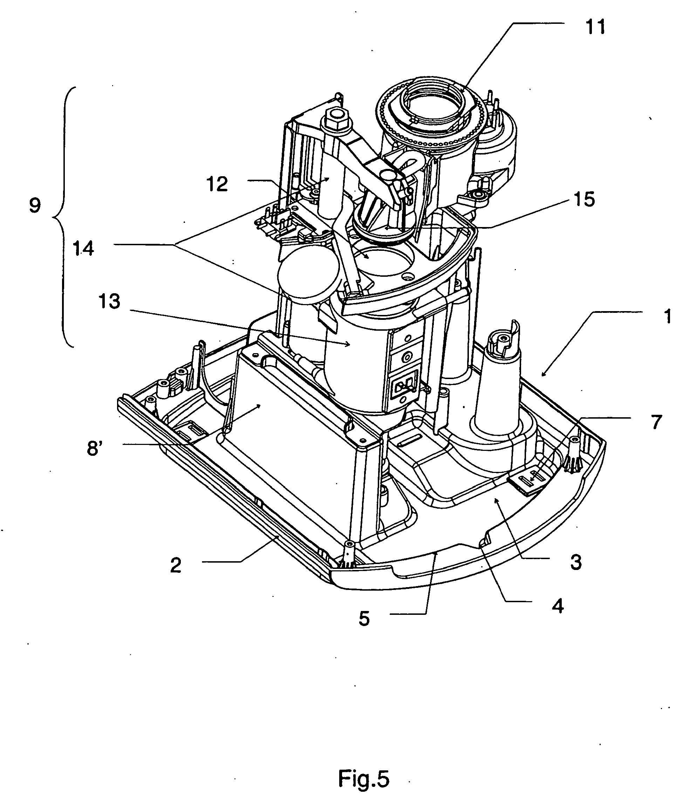

La face interne 3 du plancher supporte le boîtier (non représenté) et des sous-ensembles techniques 9. Comme dans de nombreux appareils de ce type, le socle a pour fonction de supporter des sous-ensembles techniques 9 ainsi qu'un boîtier dans lequel est contenu une partie ou l'ensemble des sous-ensembles techniques 9 (figure 5).

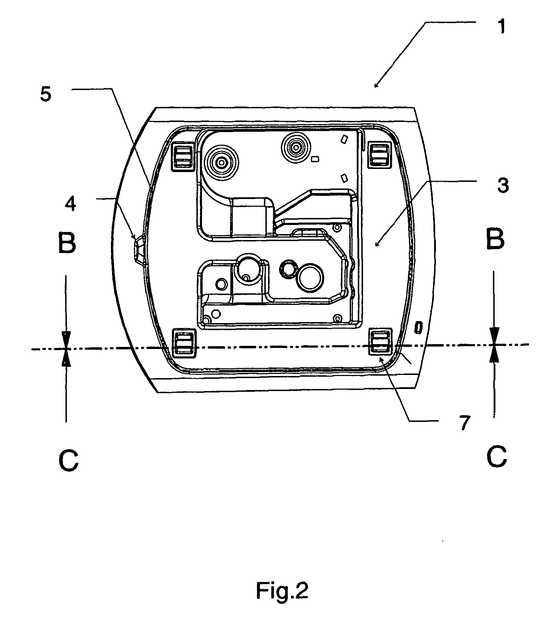

La base du plancher 2 a la forme d'un rectangle prolongé d'une partie circulaire sur un de ses côtés (Voir figure 2). La partie circulaire correspond à la face avant du socle 1.

Plus particulièrement, selon l'invention, la face interne 3 du plancher 2 du socle 1 est inclinée vers au moins un orifice d'évacuation 4 situé sur un bord du socle 1 et débouchant vers l'extérieur.

Dans ce mode de configuration, la face interne 3 est inclinée vers un seul orifice d'évacuation 4 correspondant à une perforation située au niveau du bord avant 5 du socle 1 de l'appareil.

Cet orifice d'évacuation 4 est placé au centre de la partie circulaire située à l'avant et au niveau du point le plus bas de ce bord de manière à optimiser l'écoulement des liquides.

De manière à respecter la norme actuellement en vigueur, l'appareil doit avoir un socle avec une ou des perforations dont la surface totale doit être au moins égale à 20 mm².

Dans ce mode de configuration, l'orifice d'évacuation 4 sera de préférence de forme rectangulaire, de 6 mm de largeur sur 4 mm de hauteur par exemple.
Cet orifice 4 peut être prolongé d'une petite gouttière amenant le liquide un peu plus loin.

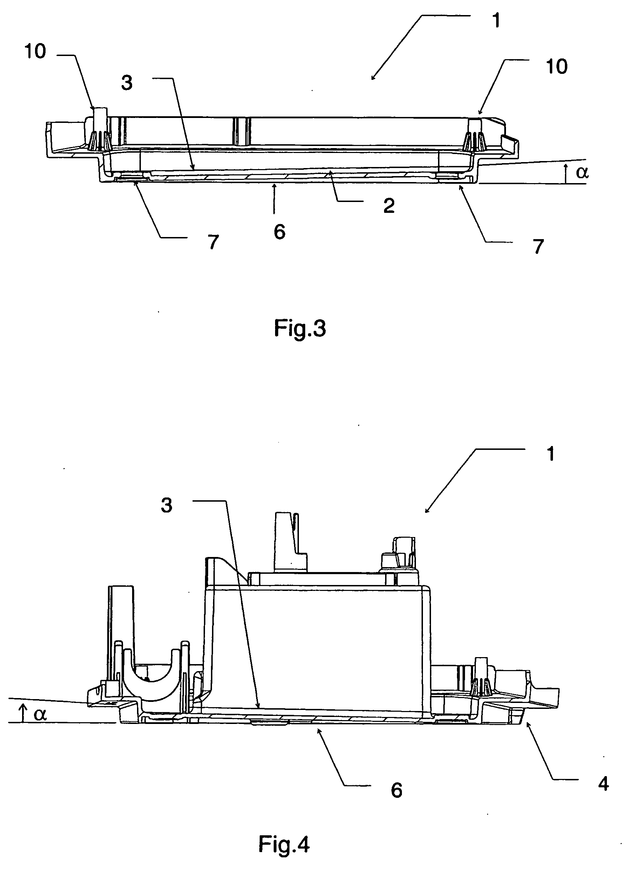

La face interne 3 du plancher 2 est inclinée selon un angle α par rapport au plan de la face externe 6 du plancher (Voir figures 3 et 4) . D'après les essais, la valeur optimale de l'angle α avoisine 1° ; cette valeur est suffisante pour que l'eau puisse s'écouler comme prévu vers l'avant en cas de fuites.

La face interne 3 du plancher 2 du socle 1 de l'appareil présente des reliefs 8 et 8' destinés à supporter des sous-ensembles techniques 9 présentés plus en détails par la suite.

A l'exclusion des faces supérieures des reliefs 8 et 8' supportant les sous-ensembles techniques 9, la face interne 3 du plancher 2 ne comporte aucune parcelle de surface horizontale ni creuse.

L'inclinaison de la face interne 3 du plancher 2 et l'ensemble des reliefs 8 et 8' ainsi que les formes la composant sont réalisés de manière à optimiser l'écoulement des liquides vers l'orifice d'évacuation 4.

Le socle 1 supporte le boîtier de l'appareil qui est fixé au moyen de vis venant s'insérer au niveau d'orifices de quatre reliefs 10 placés au niveau des rebords externes du socle 1.

Le socle 1 est placé sur le plan de travail au moyen de patins. Ces patins sont fixés au socle 1 au niveau de zones de fixation 7 prévues à cet effet et ayant été rendues étanches. Cette étanchéité est réalisée une fois tous les constituants de l'appareil mis en place.

Le matériau du socle 1 est, de préférence, un plastique moulé type ABS (copolymère acrylonitrile- butadiène- styrène), choisi avec un faible coefficient d'adhérence de manière à obtenir une mouillabilité moindre du liquide sur la face interne du socle de l'appareil.

La face interne 3 du plancher 2 du socle 1 est recouverte d'une pellicule de PTFE lisse.

La figure 5 représente le même socle d'un appareil à café automatique du type espresso, selon le mode de réalisation de l'invention, muni d'une partie des sous-ensembles techniques 9 ; certains composants n'ont pas été représentés pour plus de clarté.

Parmi les sous-ensembles techniques 9, l'appareil dispose d'un réservoir de grains de café non représenté, d'un broyeur de grains de café 11 et d'un moteur électrique permettant de fournir du café moulu dont une dose sera reçue par une chambre de percolation 12 située au dessus d'un bloc de chauffe 13.

La chambre de percolation 12 reçoit une tête de tassage 15 de la mouture de café déplacée verticalement grâce à l'action d'un vérin hydraulique 14.
Le bloc de chauffe 13 alimente en eau chaude la chambre de percolation 12, cette eau chaude est envoyée sur la mouture de café puis la boisson infusée est évacuée à l'extérieur du boîtier de l'appareil où elle est recueillie dans une tasse par exemple.

Grâce à un éjecteur et un guide éjecteur, la mouture usagée est éjectée dans un bac prévu à cet effet. Ce bac de récupération, non représenté, est supporté par le relief 8' du socle 1 de l'appareil.

L'ensemble du circuit hydraulique comporte de nombreux conduits et canalisations ainsi que de nombreux joints fixant ces derniers. L'ensemble des éléments du circuit hydraulique situés à l'intérieur du boîtier ainsi que l'ensemble des liaisons entre ces éléments et d'autres sous-ensembles techniques peuvent être à l'origine d'une fuite interne liquide.

La nature du liquide fuyant est donc de l'eau ou un mélange d'eau et de poudre ou de marc de café ou de l'eau contenant du café infusé.

Normalement, l'appareil est conçu pour ne pas fuir. Cependant, en production, il est possible de rencontrer un tuyau défectueux, un collier mal serré, un joint défectueux ; il s'agit alors de petites fuites. Il est possible que ces fuites se trouvent asséchées avant de les voir apparaître à l'avant de l'appareil, ce cas étant toutefois rare. Dans les cas de fuite les plus courants, la quantité de liquide fuyant sera suffisante et permettra une apparition rapide de la fuite vers l'avant.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

On pourrait également envisager un socle avec plusieurs orifices d'évacuation et donc plusieurs inclinaisons vers ces différents orifices, par exemple sur les deux angles avant du socle.

On pourrait également envisager un orifice d'évacuation directe situé sur une face déportée de l'appareil avec un moyen de prévention placé à l'avant de l'appareil.

On pourrait également envisager une gouttière placée au niveau du ou des orifices d'évacuation de manière à faire parvenir le liquide encore plus en évidence du point de vue de l'utilisateur, en tenant compte de la largeur du rebord supérieur de la cuvette formant le socle de l'appareil.

Cette invention peut s'appliquer à différents types d'appareils à préparer des boissons chaudes ou froides par infusion tels que des cafetières électriques à filtres, des machines et cafetières à espresso, des théières, des appareils à préparer des boissons à base de chocolat, de potages lyophilisés, des appareils à préparer des boissons froides, à base de jus d'orange lyophilisé par exemple.

## Revendications

1. Appareil électrique à préparer des boissons comportant un boîtier présentant un socle (1) et renfermant un moyen de fourniture de liquide susceptible de provoquer une fuite interne, **caractérisé en ce que** ledit socle (1) comporte un plancher (2) dont la face interne (3) est inclinée vers au moins un orifice d'évacuation (4) situé sur un bord dudit socle (1) et débouchant vers l'extérieur.

2. Appareil électrique à préparer des boissons selon la revendication 1, **caractérisé en ce que** l'orifice d'évacuation (4) se situe au niveau du point le plus bas de la face interne inclinée (3) du plancher (2) du socle (1).

3. Appareil électrique à préparer des boissons selon la revendication 2, **caractérisé en ce que** ledit socle (1) comprend un bord avant (5) au centre duquel est situé l'orifice d'évacuation (4).

4. Appareil électrique à préparer des boissons selon l'une des revendications précédentes, **caractérisé en ce que** la face interne (3) du plancher (2) est inclinée par rapport à l'horizontale d'un angle α compris entre 0.5° et 10°, de préférence de 1 °.

5. Appareil électrique à préparer des boissons selon l'une des revendications précédentes, **caractérisé en ce que** la face interne (3) du plancher (2) comporte des reliefs (8,8') destinés à supporter des sous-ensembles techniques (9) et présentant des parois inclinées.

6. Appareil électrique à préparer des boissons selon l'une des revendications précédentes, **caractérisé en ce que** le plancher (2) comporte des perforations (7) rendues étanches.

7. Appareil électrique à préparer des boissons selon l'une des revendications précédentes, **caractérisé en ce que** le socle (1) est réalisé en un matériau plastique.

8. Appareil électrique à préparer des boissons selon l'une des revendications précédentes, **caractérisé en ce que** la face interne (3) du plancher (2) du socle (1) est recouverte d'une pellicule de PTFE lisse.

## Claims

1. An electrical appliance for preparing beverages, which electrical appliance includes a housing having a base (1) and enclosing liquid-delivery means that might cause an internal leak to occur, said electrical appliance being **characterized in that** said base (1) has a floor (2) with an inside face (3) that is inclined towards at least one drain orifice (4) situated on one edge of said base (1), and opening out towards the outside.

2. An electrical appliance for preparing beverages according to claim 1, **characterized in that** the drain orifice (4) is situated at the lowest point of the inclined inside surface (3) of the floor (2) of the base (1).

3. An electrical appliance for preparing beverages according to claim 2, **characterized in that** said base (1) has a front edge (5) at the center of which the drain orifice (4) is situated.

4. An electrical appliance for preparing beverages according to any preceding claim, **characterized in that** the inside face (3) of the floor (2) is inclined relative to the horizontal at an angle α lying in the range 0.5° to 10°, and preferably at an angle of 1°.

5. An electrical appliance for preparing beverages according to any preceding claim, **characterized in that** the inside face (3) of the floor (2) is provided with pieces in relief (8, 8') designed to support technical subassemblies (9) and having inclined walls.

6. An electrical appliance for preparing beverages according to any preceding claim, **characterized in that** the floor (2) is provided with perforations (7) that are made leaktight.

7. An electrical appliance for preparing beverages according to any preceding claim, **characterized in that** the base (1) is made of a plastics material.

8. An electrical appliance for preparing beverages according to any preceding claim, **characterized in that** the inside face (3) of the floor (2) of the base (1) is covered with a smooth film of polytetrafluoroethylene (PTFE).

## Patentansprüche

1. Elektrisches Gerät zum Zubereiten von Getränken, mit einem Gehäuse, das einen Sockel (1) aufweist und ein Mittel zum Liefern von Flüssigkeit umschließt, die einen inneren Leckstrom darstellen kann, **dadurch gekennzeichnet, dass** der Sockel (1) einen Boden (2) aufweist, dessen Innenfläche (3) zu mindestens einer Ablauföffnung (4) geneigt ist, die an einem Rand des Sockels (1) angeordnet ist und nach außen mündet.

2. Elektrisches Gerät zum Zubereiten von Getränken nach Anspruch 1, **dadurch gekennzeichnet, dass** sich die Ablauföffnung (4) am niedrigsten Punkt der geneigten Innenfläche (3) des Bodens (2) des Sockels (1) befindet.

3. Elektrisches Gerät zum Zubereiten von Getränken nach Anspruch 2, **dadurch gekennzeichnet, dass** der Sockel (1) einen vorderen Rand (5) aufweist, in dessen Mitte sich die Ablauföffnung (4) befindet.

4. Elektrisches Gerät zum Zubereiten von Getränken nach einem der vorhergehenden Ansprüche, **dadurch gekennzeichnet, dass** die Innenfläche (3) des Bodens (2) in Bezug auf die Horizontale um einen Winkel α geneigt ist, der zwischen 0,5° und 10° und vorzugsweise 1° beträgt.

5. Elektrisches Gerät zum Zubereiten von Getränken nach einem der vorhergehenden Ansprüche, **dadurch gekennzeichnet, dass** die Innenfläche (3) des Bodens (2) Erhebungen (8, 8') aufweist, die dazu vorgesehen sind, technische Unterbaugruppen (9) zu stützen, und geneigte Wände aufweisen.

6. Elektrisches Gerät zum Zubereiten von Getränken nach einem der vorhergehenden Ansprüche, **dadurch gekennzeichnet, dass** der Boden (2) Löcher (7) aufweist, die abgedichtet wurden.

7. Elektrisches Gerät zum Zubereiten von Getränken nach einem der vorhergehenden Ansprüche, **dadurch gekennzeichnet, dass** der Sockel (1) aus einem Kunststoffmaterial hergestellt ist.

8. Elektrisches Gerät zum Zubereiten von Getränken nach einem der vorhergehenden Ansprüche, **dadurch gekennzeichnet, dass** die Innenfläche (3) des Bodens (2) des Sockels (1) mit einem glatten PTFE-Film überzogen ist.
